# EUROPÄISCHE PATENTSCHRIFT

(11) **EP 2 154 993 B1**
(45) Veröffentlichungstag und Bekanntmachung des Hinweises auf die Patenterteilung: **02.05.2012**
(21) Anmeldenummer: 08758705.1
(22) Anmeldetag: 23.05.2008
(51) Int. Cl.: A23L 1/18, A47J 27/00, A47J 36/02, H05B 6/06, H05B 6/12

(54) **POPCORNMASCHINE MIT INDUKTIONSHEIZUNG**
POPCORN MACHINE COMPRISING AN INDUCTION HEATER
MACHINE À POP-CORN À CHAUFFAGE PAR INDUCTION

(30) Priorität: 29.05.2007 DE 102007025026
(43) Veröffentlichungstag der Anmeldung: 24.02.2010
(73) Patentinhaber: PCO Group GmbH, 23942 Dassow (DE)
(72) Erfinder: RICHTER, Norbert, 23948 Elmenhorst (DE)
(74) Vertreter: Thomas, Götz
(86) Internationale Anmeldenummer: PCT/EP2008/004106
(87) Internationale Veröffentlichungsnummer: WO 2008/145303

(56) Entgegenhaltungen:
- DE-A1- 10 122 337
- US-A- 5 928 550

## Beschreibung

Die Erfindung betrifft eine Popcornmaschine mit einem Gehäuse, einem Behälter zum Erhitzen von in den Behälter zugeführtem Mais und Fett unter Bildung von Popcorn, wobei der Behälter zum Entleeren in Bezug zum Gehäuse verschwenkbar ist, sowie mit einer Induktionsheizung, die eine unterhalb des Behälters angeordnete Induktionswicklung zur Erzeugung eines hochfrequenten Wechselmagnetfelds umfasst.

Popcornmaschinen besitzen normalerweise ein Gehäuse und einen in Bezug zum Gehäuse schwenkbaren topf- oder kesselartigen Behälter, in dem Mais und Fett sowie ggf. weitere Zutaten unter Bildung von Popcorn erhitzt werden können. Dazu ist unter dem Boden des Behälters zumeist ein gebogenes röhrenförmiges Heizelement einer Widerstandsheizung angebracht. Das Heizelement kann mit Strom aus dem Netz beaufschlagt werden, um den Boden des Behälters und dadurch die in den Behälter eingebrachten, zur Herstellung von Popcorn benötigten Zutaten zu erhitzen und auf der zur Herstellung des Popcorn erforderlichen Temperatur zu halten. Die Maschinen besitzen darüber hinaus ein Rührwerk, mit dem der Behälterinhalt beim Erhitzen umgerührt werden kann, um für eine gleichmäßigere Erwärmung der Maiskörner bis zum Aufplatzen (Poppen) zu sorgen. Da das Volumen der Maiskörner beim Aufplatzen stark zunimmt, während ihr spezifisches Gewicht stark abnimmt, bleiben die noch nicht geplatzten Maiskörner am Boden des Behälters zurück, während das fertige Popcorn durch die Einwirkung des Rührwerks im Behälter nach oben transportiert wird. Wenn der Behälter voll ist, drückt das Popcorn einen Behälterdeckel auf, der bis dahin ein Herausspringen der Maiskörner aus dem Behälter verhindert, und fällt nach unten in eine Auffangwanne, die in der Regel in einem Warmhalteraum des Gehäuses angeordnet ist. Während der Behälter bei kleineren Popcornmaschinen schwenkbar an einem Gehäuseoberteil im Warmhalteraum aufgehängt ist, ist er bei größeren Maschinen in der Regel oberhalb der Auffangwanne schwenkbar auf einem Sockel montiert. Dadurch kann der Behälter nach der Fertigstellung des Popcorn in eine Entleerstellung verschwenkt werden, in der das restliche Popcorn aus dem Behälter in die Auffangwanne fällt, aus der es dann bei Bedarf entnommen werden kann. Nachdem der Behälter in seine Arbeitsstellung zurück verschwenkt worden ist, ist er zur Aufnahme einer neuen Charge von Fett und Mais bereit.

Bei der Herstellung von Popcorn in einem mit einer Widerstandsheizung beheizbaren Behälter wird relativ viel Energie verbraucht. Zum einen muss der Behälter für eine gleichmäßige Erhitzung von Mais und Fett eine verhältnismäßig große Wärmekapazität besitzen, so dass er viel Strahlungswärme an die Umgebung abgibt, die nicht zur Erwärmung der Zutaten zur Verfügung steht. Außerdem muss der Behälter auch im Zeitraum zwischen seiner Entleerung und einer erneuten Befüllung beheizt werden, um eine unerwünschte Abkühlung des Behälters vor der Aufnahme der nächsten Charge zu vermeiden, wodurch ebenfalls viel Energie verloren geht.

Aus diesem Grund wurde im US-Patent 5,928,550 bereits eine Popcornmaschine der eingangs genannten Art vorgeschlagen, die an Stelle einer Widerstandsheizung eine Induktionsheizung aufweist. Die Induktionsheizung dieser Popcornmaschine umfasst einen Generator und eine Induktionswicklung zur Erzeugung eines hochfrequenten Wechselmagnetfelds. Der Generator und die Induktionswicklung sind unterhalb des schwenkbaren Behälters in einem gehäusefesten Sockel untergebracht, der über die Auffangwanne übersteht und in den Warmhalteraum ragt. Diese Anordnung hat mehrere Nachteile: Zum einen beansprucht der Sockel verhältnismäßig viel Platz im Warmhalteraum, der eigentlich zur Aufnahme von Popcorn vorgesehen ist, und erschwert darüber hinaus die Entnahme von Popcorn aus der Auffangwanne, insbesondere von demjenigen Popcorn, das zwischen den runden Sockel und die Rückseite des Gehäuses fällt. Um ein Verschwenken des an der Decke des Warmhalteraums aufgehängten Behälters aus einer Arbeitsstellung mit nach oben weisender Behälteröffnung um mehr als 90 Grad in eine Entleerstellung mit nach unten weisender Behälteröffnung zu ermöglichen, ist zum anderen ein großer Abstand zwischen der Oberseite des Sockels und dem Boden des Behälters erforderlich. Dies wiederum führt zu einer erheblichen Abschwächung des von der Induktionswicklung erzeugten Wechselmagnetfelds, bevor es den aufzuheizenden Behälterboden erreicht. Das bedeutet, dass zur Aufheizung des Behälterbodens verhältnismäßig viel Zeit und Strom benötigt wird. Darüber hinaus fällt das Popcorn beim Entleeren auf die Oberseite des Sockels, von wo es sorgfältig entfernt werden muss, da es sonst durch die vom Behälterboden in der Arbeitsstellung nach unten abgestrahlte Hitze anbrennen kann. Nicht zuletzt sind in dem Behälter keinerlei elektrische Komponenten untergebracht, damit sich dieser zur Reinigung in Wasser untertauchen lässt. Dadurch ist es jedoch schwierig, die Temperatur des Behälterbodens genau zu messen und in einem für die Popcornherstellung gewünschten engen Temperaturbereich zu halten.

Ausgehend hiervon ist es ein Ziel der Erfindung, bei einer Popcornmaschine der eingangs genannten Art eine Schwächung des von der Induktionswicklung erzeugten Wechselmagnetfelds infolge eines übermäßig großen Abstands zwischen der Induktionswicklung und dem Boden des Behälters zu vermeiden.

Ein anderes Ziel der Erfindung ist es, die für die Herstellung einer Charge Popcorn benötigte Zeit zu verkürzen.

Außerdem ist es ein weiteres Ziel, den Platz im Warmhalteraum möglichst vollständig zur Aufnahme von Popcorn zu nutzen und die Entnahme des Popcorns aus der Auffangwanne bzw. dem Warmhalteraum zu erleichtern.

Darüber hinaus ist es ein noch anderes Ziel, eine Überhitzung von Popcorn im Behälter oder außerhalb des Behälters sicher zu verhindern.

Diese Ziele werden erfindungsgemäß dadurch erreicht, dass die Induktionswicklung zusammen mit dem Behälter verschwenkbar und bevorzugt in einen Boden des Behälters integriert ist.

Versuche mit einer erfindungsgemäßen Popcornmaschine haben gezeigt, dass sich im Vergleich zu einer herkömmlichen Popcornmaschine mit Widerstandsheizung eine Charge Popcorn mit etwa 30 bis 35 % weniger Energie herstellen lässt, wobei die zur Herstellung benötigte Zeit um etwa 30 bis 50 % verkürzt werden kann.

Zwar ist es bei Popcornmaschinen mit einer Widerstandsheizung bereits bekannt, die Heizelemente der Widerstandsheizung in einem doppelten Boden des Behälters unterzubringen. Jedoch bestehen die Heizelemente von Widerstandsheizungen aus einem Metall mit hohem elektrischem Widerstand, wie beispielsweise Nickel, um bei einer Stromzufuhr für eine starke Erwärmung der Heizelemente zu sorgen, während die von einem Netzteil im Gehäuse der Popcornmaschine zu den Heizelementen führenden Zuleitungen aus Kupfer oder einem anderen Material mit einem sehr geringen elektrischen Widerstand hergestellt sind, so dass sie sich bei einer Stromzufuhr zu den Heizelementen nur wenig erwärmen und somit die Erwärmung auf die Heizelemente begrenzt bleibt. Im Unterschied dazu umfassen Induktionsheizungen neben einem Netzteil einen mit der Induktionswicklung verbundenen Hochfrequenzgenerator oder Frequenzwandler, der wegen einer Beeinflussung seiner elektrischen Komponenten durch das von der Induktionswicklung erzeugte Wechselmagnetfeld in einem gewissen Abstand von der Induktionswicklung angeordnet werden sollte, so dass er sich bei Popcornmaschinen nicht ohne eine erhebliche Vergrößerung des Behälters gemeinsam mit der Induktionswicklung in diesen integrieren lässt. Wenn jedoch der Frequenzgenerator oder Frequenzwandler stationär im Gehäuse der Popcornmaschine untergebracht und durch Zuleitungen mit der Induktionswicklung verbunden wird, wird um jede der Zuleitungen herum ebenfalls ein Wechselmagnetfeld erzeugt. Diese Magnetfelder werfen Probleme auf, da sie in benachbarten metallischen Teilen des Gehäuses Wirbelströme erzeugen können, die eine unerwünschte Aufheizung dieser Teile und Sicherheitsprobleme zur Folge haben.

Es hat sich jedoch gezeigt, dass diese Probleme vermieden werden können, wenn der stationär in einem Gehäuse der Popcornmaschine untergebrachte Hochfrequenzgenerator oder Frequenzwandler gemäß einer bevorzugten Ausgestaltung der Erfindung durch zwei in engem Abstand nebeneinander her geführte Zuleitungen mit der Induktionswicklung verbunden ist, da sich in diesem Fall die um die Zuleitungen herum erzeugten hochfrequenten Wechselmagnetfelder im Wesentlichen aufheben.

Eine weitere bevorzugte Ausgestaltung der Erfindung sieht vor, dass die Induktionswicklung in einem Zwischenraum zwischen einem inneren und einem äußeren Boden des Behälters angeordnet ist. Der innere, oberhalb der Induktionswicklung angeordnete Boden besteht aus einem leitfähigen Metall, in dem bei einer Zufuhr von Hochfrequenzwechselstrom zur Induktionswicklung durch das von der Induktionswicklung erzeugte Wechselmagnetfeld Wirbelströme induziert werden. Am besten besteht der innere Boden aus einem ferromagnetischen Metall, das eine hohe Permeabilitätszahl besitzt. Die Feldlinien des Magnetfeldes werden dann im Boden konzentriert und dadurch sehr starke Wirbelströme induziert. Wegen des relativ hohen elektrischen Widerstandes führen die Wirbelströme zu einer sehr schnellen Erwärmung des Bodens. Darüber hinaus wird in ferromagnetischen Materialien bei hohen Frequenzen durch eine nicht-synchrone Umpolung von Weiß'schen Bezirken zusätzlich Wärme erzeugt.

Um eine übermäßige Erwärmung der Induktionswicklung infolge der vom inneren Boden nach unten abgestrahlten Wärme zu vermeiden, ist die Induktionswicklung zweckmäßig in einem Abstand von 10 bis 30 mm unterhalb des inneren Bodens angeordnet, wobei ihr Außendurchmesser zweckmäßig dem Durchmesser des inneren Bodens entspricht. Vorteilhaft besteht die Induktionswicklung aus mindestens einem spiralförmig verlaufenden Leiter, der parallel zum inneren Boden auf einem wärmebeständigen flachen Träger angebracht ist. Um zu vermeiden, dass sich das Wechselmagnetfeld über den Träger hinaus nach unten erstreckt, sind auf dessen Unterseite bevorzugt radiale Flussleitstücke mit hoher Permeabilitätszahl befestigt, die im Unterschied zum inneren Boden jedoch aus einem nichtleitenden Material und zweckmäßig aus Ferrit bestehen, um einer Induzierung von Wirbelströmen entgegen zu wirken.

Der vor allem als Schutz vor einer Berührung der Induktionswicklung und der Zuleitungen dienende äußere Boden des Behälters ist zweckmäßig in einem geringeren Abstand unterhalb der Induktionswicklung angeordnet und besteht vorteilhaft aus einem elektrischen Isolator mit dia- oder paramagnetischen Eigenschaften. Vorzugsweise wird ein temperaturbeständiges Kunststoff- oder Keramikmaterial verwendet, das die vom inneren Boden nach unten abgestrahlte Wärme aushält und sich in dem schwachen, unterhalb der Induktionswicklung erzeugten Streumagnetfeld nicht erwärmt.

Um eine Überhitzung von Mais, Fett und Popcorn im Behälter infolge eines überhitzten inneren Behälterbodens zu vermeiden, weist die Popcornmaschine gemäß einer weiteren bevorzugten Ausgestaltung der Erfindung einen Temperatursensor zur Messung der Temperatur des inneren Bodens auf, der zweckmäßig im Kontakt mit dem inneren Boden steht und im Zwischenraum zwischen dem inneren und dem äußeren Boden angeordnet ist.

Die Popcornmaschine umfasst weiter Einrichtungen zur Steuerung bzw. Regelung der Stromzufuhr zur Induktionswicklung und/oder der Frequenz des zur Induktionswicklung zugeführten Stroms in Abhängigkeit von der Temperatur des inneren Bodens, um diesen innerhalb eines optimalen Temperaturbereichs zu halten.

Als Maßnahme zur Vermeidung einer übermäßigen Erwärmung der Induktionswicklung und des äußeren Bodens kann vorgesehen werden, den äußeren Boden und/oder eine zwischen dem äußeren und dem inneren Boden angeordnete Umfangswand des Behälters mit Lüftungsöffnungen zu versehen. Gegebenenfalls kann darüber hinaus noch eine Zwangsbelüftung des Zwischenraums zwischen dem äußeren und dem inneren Boden mit Hilfe eines elektrisch angetriebenen Lüfters vorgesehen werden.

Um zu verhindern, dass der innere Boden weiter beheizt wird, obwohl sich nach dem Entleeren des Behälters in diesem kein Popcorn mehr befindet, umfasst die Popcornmaschine vorzugsweise Einrichtungen zur automatischen Abschaltung der Stromzufuhr zur Induktionswicklung, die ausgelöst oder aktiviert werden, sobald der Behälters aus einer horizontalen Arbeitsstellung in eine geneigte Entleerstellung verschwenkt oder vor dem Verschwenken eine Arretierung des Behälters gelöst oder entriegelt wird. Nach einer Aktivierung dieser Einrichtungen muss zweckmäßig zuerst ein Schalter manuell betätigt werden, bevor eine erneute Stromzufuhr zur Induktionswicklung möglich ist.

Bei kleineren Popcornmaschinen, bei denen der Behälter über der Auffangwanne im Warmhalteraum aufgehängt ist, ragt das Rührwerk im Allgemeinen von oben her in den Behälter und wird über eine Antriebswelle von einem oberhalb des Behälters in einem Oberteil des Gehäuses montierten elektrischen Antriebsmotor angetrieben. Demgegenüber wird das Rührwerk bei größeren Popcornmaschinen mit einem oberhalb von einer Auffangwanne auf einem Trägersockel montierten Behälter von einem Antriebsmotor im Trägersockel über eine Antriebswelle angetrieben, die von unten durch den Boden in den Behälters ragt. In diesem Fall weist die Induktionswicklung zweckmäßig eine mittige Öffnung für die Antriebswelle auf. Um eine Erwärmung der Antriebswelle durch das Wechselmagnetfeld zu verhindern, kann die Antriebswelle entweder in diesem Bereich sowie zwischen der Induktionswicklung und dem Boden des Behälters aus einem elektrisch nichtleitenden dia- oder paramagnetischen Material bestehen oder kann dort alternativ von einer Hülle aus einem nichtleitenden ferromagnetischen Material, wie Ferrit, umgeben sein.

Im folgenden wird die Erfindung anhand zweier in der Zeichnung dargestellter Ausführungsbeispiele näher erläutert. Es zeigen:
Fig. 1 eine perspektivische Ansicht einer kleineren Popcornmaschine mit einer Induktionsheizung;
Fig. 2 eine auseinandergezogene perspektivische Ansicht eines zur Herstellung von Popcorn dienenden beheizbaren Behälters der Popcornmaschine aus Fig. 1;
Fig. 3 eine vergrößerte Unterseitenansicht der Induktionswicklung;
Fig. 4 eine Querschnittsansicht von Teilen einer größeren Popcornmaschine mit einer Induktionsheizung.

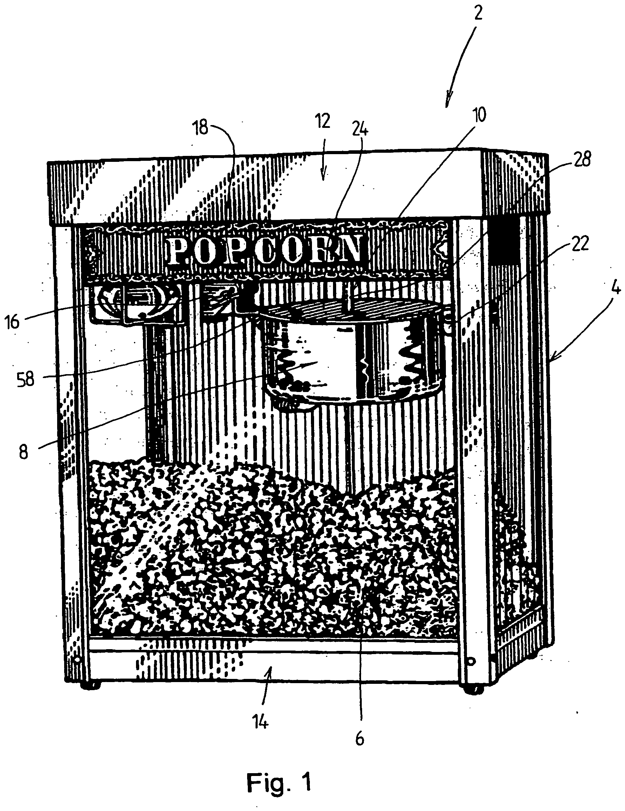

Die in Fig. 1 dargestellte Popcornmaschine 2 umfasst wie die meisten Maschinen zur Herstellung von Popcorn aus Maiskörnern, Fett und ggf. weiteren Zutaten ein quaderförmiges Gehäuse 4, einen von Gehäuse 4 umschlossenen beleuchteten und beheizbaren Warmhalteraum 6 mit einer den Boden des Warmhalteraums 6 bildenden Auffangwanne (nicht sichtbar) zur Aufnahme des fertigen Popcorns, einen im Inneren des Warmhalteraums 6 untergebrachten beheizbaren Behälter 8, in dem die Maiskörner, das Fett und die eventuellen weiteren Zutaten bis zum Platzen (Poppen) der Maiskörner erhitzt werden können, sowie ein motorisch angetriebenes Rührwerk 10 zum Umrühren der Zutaten im Behälter 8.

Das Gehäuse 4 besteht im Wesentlichen aus vier Seitenwänden, die den Warmhalteraum 6 seitlich umgeben und ganz oder teilweise verglast sind, wobei sich mindestens eine der Seitenwände zur Entnahme von Popcorn aus dem Warmhalteraum 6 bzw. der Auffangwanne öffnen lässt, einem oberhalb des Warmhalteraums 6 angeordneten, die Decke des Warmhalteraums 6 bildenden Gehäuseoberteil 12 und einem unterhalb der Auffangwanne bzw. des Warmhalteraums 6 angeordneten Gehäuseunterteil 14.

Bei der in Fig. 1 dargestellten kleineren Popcornmaschine 2 ist der beheizbare topfförmige Behälter 8 schwenkbar im oberen Teil des Warmhalteraums 6 aufgehängt, wobei er an einer Seite durch einen Tragarm 16 mit einem Schwenkgelenk 18 mit horizontaler Schwenkachse 20 gelenkig mit dem Gehäuseoberteil 12 verbunden ist, während er an der diametral entgegengesetzten Seite von einem Tragarm (nicht sichtbar) lösbar gehalten wird. Zwischen diesem Tragarm und dem Behälter 8 ist eine Verriegelung 22 vorgesehen, mit welcher der Behälter 8 in einer in Fig. 1 dargestellten horizontalen Arbeitsstellung festgehalten werden kann, in der eine durch einen Deckel 24 verschlossene Öffnung des Behälters 8 nach oben weist. Nach Fertigstellung einer Charge Popcorn im Behälter 8 lässt sich die Verriegelung mittels eines Entriegelungshebels 26 entriegeln, um den Behälter 8 um die Schwenkachse 20 in eine Entleerstellung zu verschwenken, in der die Öffnung des Behälters 8 schräg nach unten weist, so dass das im Behälter 8 enthaltene Popcorn in die Auffangwanne des Warmhalteraums 6 entleert werden kann. Der Deckel 24 des Behälters 8 ist in der Mitte mit einer Öffnung versehen, durch die sich eine Antriebswelle 28 des Rührwerks 10 erstreckt. Das obere Ende der Antriebswelle 28 ist mit einem Antriebsmotor (nicht sichtbar) im Gehäuseoberteil 12 verbunden, während das freie untere Ende der Antriebswelle 28 mit Rührwerkskämmen oder -flügeln (nicht sichtbar) bestückt ist. Die Rührwerkskämme oder -flügel ragen in der horizontalen Arbeitsstellung des Behälters 8 von oben ins Behälterinnere, so dass die im Behälter 8 befindlichen Maiskörner während des Erhitzens bewegt werden können, um für eine gleichmäßige Aufheizung zu sorgen. Der Deckel 24 liegt lose auf einem oberen Rand des Behälters 8 auf, so dass er vom Popcorn im Behälter 8 angehoben werden kann, sobald das Volumen des Behälterinhalts infolge der Volumenzunahme beim Aufplatzen der Maiskörner das Volumen des Behälters 8 übersteigt. Beim Verschwenken in die geneigte Entleerstellung wird der Deckel 24 von der Antriebswelle zurückgehalten, so dass das restliche Popcorn durch die Öffnung aus dem Behälter 8 fallen kann.

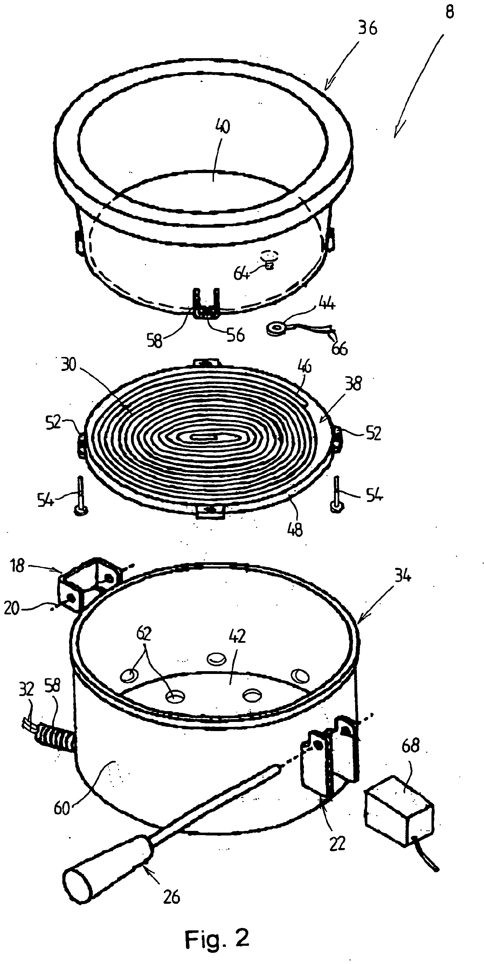

Zur Beheizung des Behälters 8 weist die Popcornmaschine 2 eine Induktionsheizung auf, die einen stationär im Gehäuseoberteil 12 untergebrachten Frequenzumformer (nicht sichtbar) und eine zusammen mit dem Behälter 8 verschwenkbare Induktionswicklung 30 (Fig. 2) umfasst, die durch Zuleitungen 32 mit dem Frequenzumformer verbunden ist.

Wie am besten in Fig. 2 dargestellt, besteht der Behälter 8 im Wesentlichen aus einem tieferen topfförmigen Außenbehälter 34, einem etwas flacheren topfförmigen Innenbehälter 36, sowie der auf einem Träger 38 montierten flachen Induktionswicklung 30, die in einem Zwischenraum zwischen einem ebenen kreisförmigen Boden 42 des Außenbehälters 34 und einem darüber angeordneten ebenen kreisförmigen Boden 40 des Innenbehälters 36 angeordnet und parallel zu den beiden Böden 40, 42 ausgerichtet ist. Unter dem Boden 40 des Innenbehälters 36 ist darüber hinaus ein Temperatursensor 44 zur Messung der Temperatur des Bodens 40 angebracht.

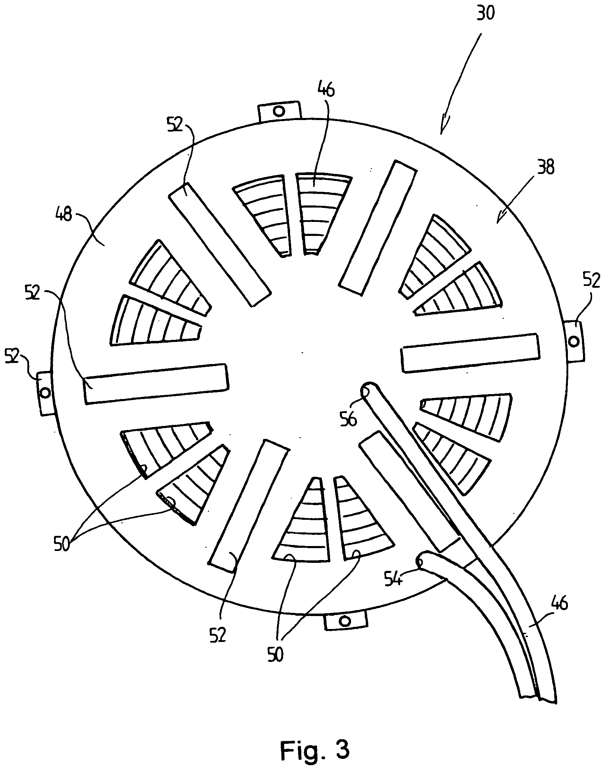

Die Induktionswicklung 30 umfasst einen spiralförmig gewundenen Leiter 46 aus einer verdrillten Kupferdrahtlitze, der in einer Wicklungsebene auf der Oberseite des Trägers 38 angeordnet und mit einem wärmebeständigen Isolierlack überzogen ist. Wie am besten in Fig. 2 und 3 dargestellt, besteht der Träger 38 aus einer flachen Scheibe 48 aus einem wärmebeständigen Kunststoff, die zur Kühlung des spiralförmigen Leiters 46 mit mehreren Durchbrechungen 50 versehen ist. Die Scheibe 48 ist zur Befestigung am Innenbehälter 36 mit vier radial überstehenden durchbohrten Befestigungsnasen 52 versehen. Durch die Bohrungen können Stellschrauben 54 von unten her in Gewindebohrungen 56 in Vorsprüngen 58 des Innenbehälters 36 eingeschraubt werden, um die Induktionswicklung 30 in einem gewünschten Abstand vom Boden 40 des Innenbehälters 36 anzubringen. Auf der Unterseite der Scheibe 48 sind zwischen den Durchbrechungen 50 radial ausgerichtete langgestreckte Flussleitstücke 52 aus einem elektrisch nichtleitenden Ferritmaterial mit einer hohen Permeabilitätszahl angeordnet, welche die Magnetfeldlinien auf der Unterseite des Trägers 38 zwischen dem äußerem Umfang und der Mitte des Trägers 38 bündeln und verhindern, dass sich das Magnetfeld über die Unterseite der Scheibe 48 hinaus erstreckt.

Der Leiter 46 erstreckt sich von dem am äußeren Umfang des Trägers 38 und bzw. in dessen Mitte angeordneten äußeren bzw. inneren Ende der Induktionswicklung 30 aus durch Bohrungen 54, 56 des Trägers 38 bis in einen Zwischenraum zwischen dem Träger 38 und dem Boden 42 des Außenbehälters 34, wo die Enden des Leiters 46 mit den Zuleitungen 32 verbunden sind.

Die Zuleitungen 32 bestehen ebenfalls aus verdrilltem Kupferdraht und weisen denselben Querschnitt wie der Leiter 36 auf. Sie erstrecken sich durch einen biegsamen Schlauch 58 vom Außenbehälter 34 bis zum Gehäuseoberteil 12, in dem ihre Enden mit Anschlüssen des Frequenzumformers verbunden sind. Um eine Erwärmung des Schlauchs 58 durch das um die Zuleitungen 32 herum erzeugte Wechselmagnetfeld zu vermeiden, verlaufen die Zuleitungen 32 in enger Nachbarschaft voneinander durch den Schlauch 58, so dass sich die beiden Wechselmagnetfelder im Wesentlichen aufheben. Außerdem besteht der Schlauch 58 entweder aus einem nichtleitenden temperaturbeständigen Kunststoffmaterial oder alternativ aus einem nichtmagnetischen Edelstahl.

Der Außenbehälter 34 umfasst einen zylindrischen Wandteil 60, an dem in der Nähe des oberen Randes Teile des Schwenkgelenks 18 und der Arretiervorrichtung 22 sowie der Entriegelungshebel 26 befestigt sind, so dass der letztere vom Benutzer ergriffen werden kann, um den Behälter 8 zu entriegeln und während des Verschwenkens zu halten. Der am unteren Stirnende des Wandteils 60 befestigte Boden 42 besteht aus einem nichtleitenden, para- oder diamagnetischen Material, zum Beispiel Keramik oder einem temperaturbeständigem Kunststoffmaterial, wie Polycarbonat. Im Boden 42 und im unteren Rand des Wandteils 60 befinden sich Lüftungsöffnungen 62, so dass die vom beheizten Boden 40 des Innenbehälters 36 nach unten abgestrahlte Wärme durch die Luftzirkulation im Zwischenraum aus diesem abgeführt werden kann. In Verbindung mit einer Messung der Temperatur des Bodens 40 des Innenbehälters 36 mittels des Temperatursensors 44 und einer Regelung der Stromzufuhr zur Induktionswicklung 30 in Abhängigkeit von der gemessenen Temperatur kann dadurch eine Überhitzung der Induktionswicklung 30 und der beiden Böden 40, 42 sowie des Fetts und der Maiskörner bzw. des fertigen Popcorns im Behälter 8 vermieden und die Temperatur des Bodens 40 innerhalb eines optimalen schmalen Temperaturbereichs gehalten werden.

Der Innenbehälter 36 und insbesondere der Boden 40 des Innenbehälters 36 besteht aus magnetischem Edelstahl oder einem anderen ferromagnetischen Metall mit hoher Permeabilitätszahl. Mit Hilfe der Stellschrauben 54 kann der Boden 40 in einem gewünschten Abstand zwischen etwa 20 bis 30 mm oberhalb der Induktionswicklung 30 angeordnet werden. Dieser Abstand gewährleistet, dass der Boden 40 zwar einerseits weit in das von der Induktionswicklung 30 erzeugte Wechselmagnetfeld ragt, jedoch andererseits eine Überhitzung der Induktionswicklung 30 durch die beim Beheizen des Behälters 8 vom Boden 40 nach unten abgestrahlte Wärme vermieden wird. Der Temperatursensor 44 ist ein als Öse ausgebildeter Kontaktsensor, der mittels einer Mutter (nicht dargestellt) an einer über die Unterseite des Bodens 40 überstehenden Schraube 64 befestigt wird.

Der Gehäuseunterteil 14 der Popcornmaschine 2 in Fig. 1 kann ein oder mehrere Heizelemente (nicht dargestellt) einer zur Beheizung des Warmhalteraums 6 dienenden Widerstandsheizung enthalten, während der Oberteil 12 neben dem Antriebsmotor für das Rührwerk 10 einen mit dem Wechselstromnetz verbindbaren Netzteil (nicht sichtbar), den Frequenzumformer zum Umformen der Frequenz des Wechselstroms aus dem Stromnetz in eine Frequenz von etwa 50 bis 60 kHz, sowie eine Steuereinheit (nicht sichtbar) zur Steuerung der Induktionsheizung durch Ein- und Ausschalten der Stromzufuhr zur Induktionswicklung 30 umschließt.

Die Steuereinheit dient dazu, der Induktionswicklung 30 aus dem Frequenzumformer Strom zuzuführen, wenn die Popcornmaschine 2 zur Herstellung von Popcorn durch Betätigung eines Schalters an einem an der Rückseite des Gehäuseoberteils 12 angeordneten Bedienfeld (nicht sichtbar) eingeschaltet wird, nachdem eine Charge Maiskörner und Fett in den Innenbehälter 36 gefüllt worden ist. Nach dem Einschalten erzeugt der Frequenzumformer Wechselstrom mit einer Frequenz von 50 bis 60 kHz, der durch die Zuleitungen 32 zur Induktionswicklung 30 zugeführt wird, wodurch die Induktionswicklung 30 ein Wechselmagnetfeld mit derselben Frequenz erzeugt. Das Wechselmagnetfeld induziert im Boden 40 des inneren Behälters 36 Wirbelströme, wodurch sich dieser sehr schnell erwärmt, zumal er nur eine verhältnismäßig geringe Materialstärke von weniger als 2 bis 3 mm besitzt. Da sich unterhalb von der Induktionswicklung 30 kein elektrisch leitfähiges Material befindet und da die Feldlinien des Wechselmagnetfelds dort von den Flussleitstücken aus Ferrit gebündelt vom äußeren Rand des Trägers 38 zur Mitte desselben geleitet werden, findet unterhalb der Induktionswicklung 30 keine Erwärmung statt. Jedoch wird infolge der Erwärmung des Bodens 40 Wärme nach unten in den Zwischenraum abgestrahlt, die dann von der durch die Lüftungsöffnungen 62 zirkulierenden Luft abgeführt wird.

Wenn die Temperatur des Bodens 40 über einen vorbestimmten oberen Schwellenwert von über 250°C, vorzugsweise etwa 210°C bis 220°C, ansteigt und dieser Temperaturanstieg vom Temperatursensor 44 erfasst und an die Steuerung übermittelt wird, schaltet diese die Stromzufuhr zur Induktionswicklung 30 kurzeitig ab, bis die Temperatur des Bodens 40 wieder unter einen unteren Schwellenwert von unter 150°C, vorzugsweise etwa 180°C bis 190°C, abgesunken ist. In diesem Temperaturbereich des Bodens 40 verläuft die Herstellung von Popcorn im Behälter 8 optimal, da dann die Maiskörner weder zu langsam noch zu schnell aufgeheizt werden. Der Temperatursensor 44 ist mit der Steuereinheit über Signalleitungen 66 verbunden, die sich zusammen mit den Zuleitungen 32 durch den Schlauch 58 erstrecken.

Wie ebenfalls am besten in Fig. 2 dargestellt, ist in der Nähe des am Wandteil 60 des Außenbehälters 34 befestigten Teils der Verriegelung 22 ein Schalter 68 am Tragarm des Gehäuses 4 befestigt. Der Schalter 68 kann zum Beispiel als Kontakt-, Magnet- oder Näherungsschalter ausgebildet sein und unterbricht die Stromzufuhr zur Induktionswicklung 30, wenn der Entriegelungshebel 26 vom Benutzer betätigt wird, um die Verriegelung 22 zum Verschwenken des Behälters zu entriegeln. Dadurch wird sichergestellt, dass der Induktionswicklung 30 nur dann Strom zugeführt wird, wenn sich der Behälter 8 in seiner in Fig. 1 dargestellten Arbeitsstellung befindet. Der Schalter 68 ist so mit der Steuerung verschaltet, dass erst nach einer erneuten Betätigung des Schalters auf dem Bedienfeld eine erneute Stromzufuhr zur Induktionswicklung 30 möglich ist.

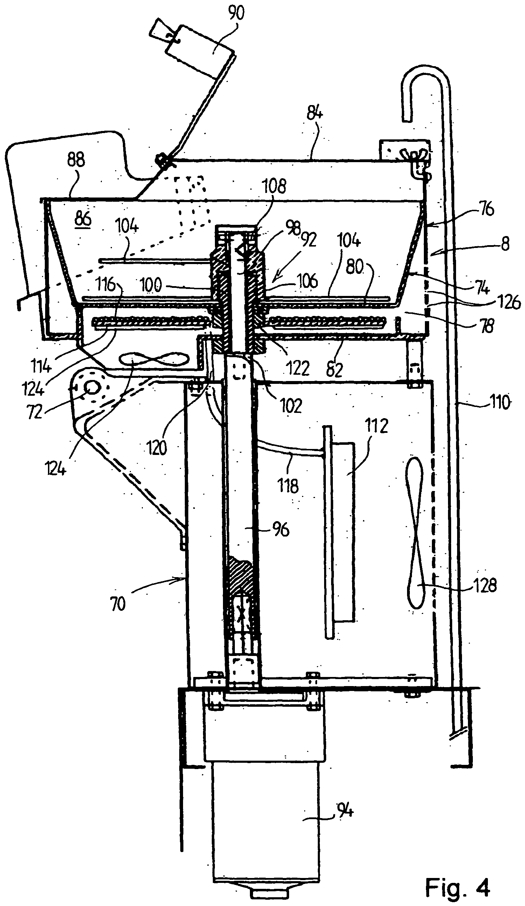

Bei größeren Popcornmaschinen ist der verschwenkbare Behälter 8 nicht wie bei der zuvor beschriebenen Popcornmaschine 2 am Gehäuseoberteil 12 aufgehängt. Wie in Fig. 4 dargestellt, wird der Behälter 8 statt dessen von einem Tragsockel 70 getragen, der über eine Auffangwanne (in Fig. 4 nicht dargestellt) der Popcornmaschine übersteht. Der Behälter 8 ist um eine unterhalb des Behälters 8 und seitlich vom Tragsockel 70 angeordnete horizontale Schwenkachse 72 verschwenkbar. Der Behälter 8 besteht ebenfalls aus einem Innen- und einem Außenbehälter 74 bzw. 76, die durch einen Zwischenraum 78 voneinander getrennt sind. Der Innenbehälter 76 besitzt wie der Innenbehälter 36 in Fig. 2 einen dünnen Boden 80 aus einem ferromagnetischen Metall mit hoher Permeabilitätszahl, während der Boden 82 des Außenbehälters 76 aus einem wärmebeständigen nichtleitenden dia- oder paramagnetischen Material besteht.

Nach oben zu ist der Behälter 8 durch einen festen Deckel 84 verschlossen. Der Behälter 8 besitzt an einer Seite einen etwas unterhalb des Deckels 84 befindlichen Auslauf 86, der durch eine schwenkbare Klappe 88 verschlossen ist. Die Klappe 88 wird durch Gegengewichte 90 in ihrer Lage gehalten, bis sie vom Druck des im Behälter 8 gebildeten Popcorns nach oben in eine geöffnete Stellung geschwenkt wird, wenn der Behälter 8 ganz mit Popcorn gefüllt ist. Ein Teil des Popcorn kann dann durch den Auslauf 86 in die Auffangwanne austreten, die wie bei der Popcornmaschine in Fig. 1 in einem Warmhalteraum angeordnet sein kann.

Das Rührwerk 92 des in Fig. 3 dargestellten Behälters 8 umfasst einen unterhalb des Behälters 8 im Tragsockel 70 angeordneten Antriebsmotor 94 und eine zweigeteilte Antriebswelle, deren vertikaler unterer Teil 96 im Tragsockel 70 drehbar gelagert ist, während der obere Teil 98 in einer die Böden 80, 82 des Behälters 8 durchsetzenden Lagerbuchse 100 gelagert und zusammen mit dem Behälter 8 verschwenkbar ist. Die beiden Teile 96, 98 sind bei 102 durch eine Kupplung verbunden, die beim Verschwenken des Behälters 8 selbsttätig ein- und ausgerückt wird. Das Rührwerk 92 umfasst mehrere radiale Rührwerkskämme oder -flügel 104, die in der Nähe des Bodens 80 des Innenbehälters 74 bzw. in einem größeren Abstand vom Boden 80 über eine drehbare Abdeckkappe 106 überstehen. Die Abdeckkappe 106 ist durch einen Splint 108 mit dem oberen Teil 98 der Antriebswelle verbunden und umgibt die in den Behälter 8 ragende Lagerbuchse 100.

Das zur Herstellung von Popcorn benötigte Fett wird hier in flüssiger Form durch ein Fettzufuhrrohr 110 in den Behälter 8 zugeführt.

Die Induktionsheizung umfasst einen im Inneren des Tragsockels 70 untergebrachten, mit einem Netzteil (nicht dargestellt) verbundenen Frequenzumformer 112 und eine auf einem Träger 114 im Zwischenraum 78 zwischen den Böden 80, 82 des Innen- und Außenbehälters 74, 76 angeordnete und zusammen mit dem Behälter 8 verschwenkbare Induktionswicklung 116. Wie bei der Maschine aus Fig. 1 und 2 ist der Frequenzumformer 102 durch Zuleitungen 118 mit der Induktionswicklung 116 verbunden, die nach dem Austritt aus dem Tragsockel 70 durch einen flexiblen Schlauch 120 zur Außenseite des Außenbehälters 76 und von dort in den Zwischenraum 78 verlaufen.

Die Induktionswicklung 116 und der Träger 114 weisen im Wesentlichen dieselbe Ausbildung auf, wie diejenigen, die in Fig. 2 dargestellt sind, außer dass der Träger 114 und die Induktionswicklung 116 eine mittige Öffnung umgeben. In der Öffnung ist am Träger 114 ein Haltering 122 befestigt, der im Abstand unterhalb des Bodens 80 des Innenbehälters 74 auf die Lagerbuchse 100 aufgeschoben und drehfest mit der Lagerbuchse 100 verbunden ist, so dass sich der drehbare obere Teil 98 der Antriebswelle in der Lagerbuchse 100 axial durch den Träger 114 und die Induktionswicklung 116 hindurch erstreckt. Der Haltering 122 kann wie Flussleitstücke 124 auf der Unterseite des Trägers 114 aus einem Ferritmaterial bestehen, wodurch vermieden wird, dass sich die Feldlinien des Wechselmagnetfelds bis zur Lagerbuchse 100 und zur Antriebswelle erstrecken, um eine Erwärmung der Lagerbuchse 100 und des oberen Teils 98 der Antriebswelle zu verhindern. Alternativ können die Lagerbuchse 100 und der obere Teil 98 der Antriebswelle auch aus einem nichtleitenden dia- oder paramagnetischen Material bestehen, beispielsweise einem Kunststoffmaterial, so dass sie sich in einem durch die Öffnung verlaufenden Wechselmagnetfeld nicht erwärmen.

Um eine Erwärmung des Trägers 114 und der Induktionswicklung 116 durch die vom Boden 80 nach unten abgestrahlte Wärme zu verhindern, ist im Zwischenraum 78 ein Lüfter 124 angeordnet, der Luft von unten her durch eine Öffnung in den Zwischenraum 78 saugt und gegen die Unterseite des Trägers 114 bläst. von dort strömt die Luft dann entlang der Unterseite des Trägers 114 zu Lüftungsöffnungen 126 an der entgegengesetzten Seite des Außenbehälters 76. Zur Kühlung des Frequenzumformers 112 befindet sich im Tragsockel 70 ebenfalls ein Lüfter 128.

Wie bei dem Behälter 8 in Fig. 2 wird die Temperatur des Bodens 80 mittels eines Temperatursensors (nicht dargestellt) gemessen und in Abhängigkeit von der gemessenen Temperatur die Stromzufuhr zur Induktionswicklung 116 gesteuert. Wenn der Behälter 8 verschwenkt wird, wird die Stromzufuhr ebenfalls abgeschaltet.

## Patentansprüche

1. Popcornmaschine mit einem Gehäuse, einem Behälter zum Erhitzen von in den Behälter zugeführtem Mais und Fett unter Bildung von Popcorn, wobei der Behälter zum Entleeren in Bezug zum Gehäuse verschwenkbar ist, sowie einer Induktionsheizung, die eine unterhalb des Behälters angeordnete Induktionswicklung zur Erzeugung eines hochfrequenten Wechselmagnetfelds umfasst, **dadurch gekennzeichnet, dass** die Induktionswicklung (30; 116) zusammen mit dem Behälter (8) verschwenkbar ist.

2. Popcornmaschine nach Anspruch 1, **dadurch gekennzeichnet, dass** die Induktionsheizung einen Hochfrequenzgenerator oder Frequenzwandler (112) umfasst, der stationär in einem Gehäuse (4) der Popcornmaschine (2) untergebracht ist.

3. Popcornmaschine nach Anspruch 2, **dadurch gekennzeichnet, dass** der Hochfrequenzgenerator oder Frequenzwandler (112) durch zwei in engem Abstand nebeneinander her geführte Zuleitungen (32; 118) mit der Induktionswicklung (30; 116) verbunden ist.

4. Popcornmaschine nach Anspruch 3, **dadurch gekennzeichnet, dass** die Zuleitungen (32; 118) zwischen dem Behälter (8) und dem Gehäuse (4) durch einen flexiblen Schlauch (58; 120) aus einem dia- oder paramagnetischen Material verlaufen.

5. Popcornmaschine nach einem der vorangehenden Ansprüche, **dadurch gekennzeichnet, dass** die Induktionswicklung (30; 116) in einem Zwischenraum (78) zwischen einem inneren und einem äußeren Boden (40, 42; 80, 82) des Behälters (8) angeordnet ist.

6. Popcornmaschine nach einem der vorangehenden Ansprüche, **dadurch gekennzeichnet, dass** die Induktionswicklung (30; 116) auf einem flachen scheibenförmigen Träger (38; 114) angeordnet ist.

7. Popcornmaschine nach Anspruch 6, **gekennzeichnet durch** radiale Flussleitstücke (50; 124) auf der Unterseite des Trägers (38; 114).

8. Popcornmaschine nach einem der Ansprüche 5 bis 7, **gekennzeichnet durch** einen Temperatursensor (44) zur Messung der Temperatur des inneren Bodens (40; 80).

9. Popcornmaschine nach einem der Ansprüche 5 bis 8, **gekennzeichnet durch** Einrichtungen zur Regelung der Stromzufuhr zur Induktionswicklung (30; 116) oder der Frequenz des zur Induktionswicklung (30; 116) zugeführten Stroms in Abhängigkeit von der Temperatur des inneren Bodens (40; 80).

10. Popcornmaschine nach einem der Ansprüche 5 bis 9, **dadurch gekennzeichnet, dass** der innere Boden (40; 80) aus einem ferromagnetischen Metall besteht und dass der äußere Boden (42, 82) aus einem nichtleitenden temperaturbeständigen Material besteht.

11. Popcornmaschine nach einem der Ansprüche 5 bis 10, **dadurch gekennzeichnet, dass** der äußere Boden (42; 82) und/oder eine äußere Wand des Behälters (8) mit Lüftungsöffnungen (62; 126) versehen ist und dass Einrichtungen (124) zur Zwangsbelüftung des Zwischenraums (78) zwischen dem inneren und dem äußeren Boden (40, 42; 80, 82) vorgesehen sind.

12. Popcornmaschine nach einem der vorangehenden Ansprüche, **gekennzeichnet durch** Einrichtungen (68) zur Abschaltung der Stromzufuhr zur Induktionswicklung (30; 116) beim Verschwenken des Behälters (8) aus einer horizontalen Arbeitsstellung in eine geneigte Entleerstellung.

13. Popcornmaschine nach Anspruch 12, **dadurch gekennzeichnet, dass** nach einer Aktivierung der Einrichtungen (68) ein Schalter betätigt werden muss, bevor eine erneute Stromzufuhr zur Induktionswicklung (30; 116) möglich ist.

14. Popcornmaschine nach einem der vorangehenden Ansprüche, **gekennzeichnet durch** ein Rührwerk (92) mit einer von unten in den Behälter (8) ragenden Antriebswelle (96, 98), die sich durch eine mittige Öffnung der Induktionswicklung (116) erstreckt.

15. Popcornmaschine nach Anspruch 14, **dadurch gekennzeichnet, dass** die Antriebswelle (96, 98) mindestens im Bereich der Induktionswicklung (116) aus einem nichtleitenden dia- oder paramagnetischen Material besteht oder von einer Hülse (122) aus einem nichtleitenden ferromagnetischen Material umgeben ist.

## Claims

1. Popcorn machine having a housing, a container for heating corn, which is supplied to the container, and oil in order to produce popcorn, it being possible to pivot the container in relation to the housing in order to empty the container, and also having an induction heater which comprises an induction winding, which is arranged beneath the container, for generating a high-frequency alternating magnetic field, **characterized in that** the induction winding (30; 116) can be pivoted together with the container (8).

2. Popcorn machine according to Claim 1, **characterized in that** the induction heater comprises a high-frequency generator or frequency converter (112) which is accommodated in a housing (4) of the popcorn machine (2) in a stationary manner.

3. Popcorn machine according to Claim 2, **characterized in that** the high-frequency generator or frequency converter (112) is connected to the induction winding (30; 116) by two supply lines (32; 118) which are routed at a short distance from and next to one another.

4. Popcorn machine according to Claim 3, **characterized in that** the supply lines (32; 118) run between the container (8) and the housing (4) through a flexible tube (58; 120) which is composed of a diamagnetic or paramagnetic material.

5. Popcorn machine according to one of the preceding claims, **characterized in that** the induction winding (30; 116) is arranged in an intermediate space (78) between an inner and an outer base (40, 42; 80, 82) of the container (8).

6. Popcorn machine according to one of the preceding claims, **characterized in that** the induction winding (30; 116) is arranged on a flat disc-like support (38; 114).

7. Popcorn machine according to Claim 6, **characterized by** radial flux-conducting components (50; 124) on the lower face of the support (38; 114).

8. Popcorn machine according to one of Claims 5 to 7, **characterized by** a temperature sensor (44) for measuring the temperature of the inner base (40; 80).

9. Popcorn machine according to one of Claims 5 to 8, **characterized by** devices for controlling the current supply to the induction winding (30; 116) or the frequency of the current, which is supplied to the induction winding (30; 116), as a function of the temperature of the inner base (40; 80).

10. Popcorn machine according to one of Claims 5 to 9, **characterized in that** the inner base (40; 80) is composed of a ferromagnetic metal, and **in that** the outer base (42, 82) is composed of a non-conductive temperature-resistant material.

11. Popcorn machine according to one of Claims 5 to 10, **characterized in that** the outer base (42; 82) and/or an outer wall of the container (8) are/is provided with ventilation openings (62; 126), and **in that** devices (124) for forced ventilation of the intermediate space (78) between the inner and the outer base (40, 42; 80, 82) are provided.

12. Popcorn machine according to one of the preceding claims, **characterized by** devices (68) for disconnecting the current supply to the induction winding (30; 116) when the container (8) is pivoted out of a horizontal operating position into an inclined emptying position.

13. Popcorn machine according to Claim 12, **characterized in that**, after activation of the devices (68), a switch has to be operated before current can again be supplied to the induction winding (30; 116).

14. Popcorn machine according to one of the preceding claims, **characterized by** a stirring mechanism (92) having a drive shaft (96, 98) which projects into the container (8) from below and extends through a central opening in the induction winding (116).

15. Popcorn machine according to Claim 14, **characterized in that** the drive shaft (96, 98) is composed of a non-conductive diamagnetic or paramagnetic material at least in the region of the induction winding (116) or is surrounded by a sleeve (122) which is composed of a non-conductive ferromagnetic material.

## Revendications

1. Machine de préparation de popcorn dotée
d'un boîtier, d'un récipient dans lequel le maïs et la graisse sont apportés pour être chauffés et former des popcorn, le récipient pouvant être incliné par rapport au boîtier pour être vidé, et
d'un chauffage à induction qui comporte une bobine d'induction formant un champ magnétique alternatif 'à haute fréquence et disposé en dessous du récipient, **caractérisée en ce que**
la bobine d'induction (30; 116) peut être pivotée en même temps que le récipient (8).

2. Machine de préparation de popcorn selon la revendication 1, **caractérisée en ce que** le chauffage à induction comporte un générateur de hautes fréquences ou un convertisseur de fréquences (112) placé en position stationnaire dans un boîtier (4) de la machine (2) de préparation de popcorn.

3. Machine de préparation de popcorn selon la revendication 2, **caractérisée en ce que** le générateur de hautes fréquences ou le convertisseur de fréquences (112) sont reliés à la bobine d'induction (30; 116) par deux conducteurs (32; 118) posés l'un à côté de l'autre à petite distance mutuelle.

4. Machine de préparation de popcorn selon la revendication 3, **caractérisée en ce qu'**entre le récipient (8) et le boîtier (4), les conducteurs (32; 118) sont placés dans un conduit flexible (58; 120) en matériau diamagnétique ou paramagnétique.

5. Machine de préparation de popcorn selon l'une des revendications précédentes, **caractérisée en ce que** la bobine d'induction (30; 116) est disposée dans un espace intermédiaire (78) situé entre un fond intérieur et un fond extérieur (40, 42; 80, 82) du récipient (8).

6. Machine de préparation de popcorn selon l'une des revendications précédentes, **caractérisée en ce que** la bobine d'induction (30; 116) est disposée sur un support (38; 114) en forme de disque plat.

7. Machine de préparation de popcorn selon la revendication 6, **caractérisée par** des pièces (50; 124) de conduction de flux disposées sur le côté inférieur du support (38; 114).

8. Machine de préparation de popcorn selon l'une des revendications 5 à 7, **caractérisée par** une sonde de température (44) qui mesure la température du fond intérieur (40; 80).

9. Machine de préparation de popcorn selon l'une des revendications 5 à 8, **caractérisée par** des dispositifs de régulation de l'apport de courant à la bobine d'induction (30; 116) ou de la fréquence du courant apporté à la bobine d'induction (30; 116) en fonction de la température du fond intérieur (40; 80).

10. Machine de préparation de popcorn selon l'une des revendications 5 à 9, **caractérisée en ce que** le fond intérieur (40; 80) est constitué d'un matériau ferromagnétique et **en ce que** le fond extérieur (42; 82) est constitué d'un matériau réfractaire non conducteur.

11. Machine de préparation de popcorn selon l'une des revendications 5 à 10, **caractérisée en ce que** le fond extérieur (42; 82) et/ou une paroi extérieure du récipient (8) sont dotés d'ouvertures de ventilation (62; 126) et **en ce que** des dispositifs (124) de ventilation forcée de l'espace intermédiaire (78) situé entre le fond intérieur et le fond extérieur (40, 42; 80, 82) sont prévus.

12. Machine de préparation de popcorn selon l'une des revendications précédentes, **caractérisée par** des dispositifs (68) de débranchement de l'apport de courant à la bobine d'induction (30; 116) lorsque le récipient (8) est incliné d'une position de travail horizontale jusque dans une position inclinée de vidange.

13. Machine de préparation de popcorn selon la revendication 12, **caractérisée en ce qu'**après activation des dispositifs (68), il faut actionner un commutateur avant qu'un nouvel apport de courant à la bobine d'induction (30; 116) soit possible.

14. Machine de préparation de popcorn selon l'une des revendications précédentes, **caractérisée par** un mécanisme de brassage (92) doté d'un arbre d'entraînement (96; 98) qui pénètre dans le récipient (8) par le bas et qui traverse une ouverture central de la bobine d'induction (116).

15. Machine de préparation de popcorn selon la revendication 14, **caractérisée en ce que** l'arbre d'entraînement (96, 98) est constitué d'un matériau diamagnétique ou paramagnétique non conducteur ou est entouré par une douille (122) en matériau ferromagnétique non conducteur, au moins au niveau de la bobine d'induction (116).
